(19) Europäisches Patentamt / European Patent Office / Office européen des brevets

(11) **EP 4 684 898 A1**

(12) **EUROPEAN PATENT APPLICATION**

(43) Date of publication:
28.01.2026  Bulletin 2026/05

(21) Application number: 25192273.8

(22) Date of filing: 28.07.2025

(51) International Patent Classification (IPC):
**B22F 10/28** (2021.01)  **B22F 10/322** (2021.01)
**B22F 10/368** (2021.01)  **B22F 10/38** (2021.01)
**B22F 12/20** (2021.01)  **B33Y 10/00** (2015.01)
**B33Y 30/00** (2015.01)  **B33Y 50/02** (2015.01)
**B22F 10/85** (2021.01)

(52) Cooperative Patent Classification (CPC):
(C-Sets available)
B22F 10/28; B22F 10/322; B22F 10/368;
B22F 10/38; B22F 10/85; B22F 12/20; B33Y 10/00;
B33Y 30/00; B33Y 50/02          (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  26.07.2024  US 202418785826

(71) Applicant: RTX Corporation
Farmington, CT 06032 (US)

(72) Inventors:
• ANAHID, Masoud
Farmington, 06032 (US)
• BURLATSKY, Sergei
Farmington, 06032 (US)
• FURRER, David
Farmington, 06032 (US)
• LIU, Jingfu
Farmington, 06032 (US)

(74) Representative: Dehns
10 Old Bailey
London EC4M 7NG (GB)

(54) **HEAT DISSIPATION CONTROL IN ADDITIVE MANUFACTURING**

(57)     A method of making a part using an additive manufacturing (AM) process includes making, with an AM process, one or more parts (24) and applying a heat dissipation technique to the one or more parts (24) during performance of the AM technique to mitigate temperature buildup in the one or more parts (24). The heat dissipation technique is applied to keep temperature at a top of a part build at or below a Threshold Temperature ($T_{th}$), which is a temperature above which keyhole porosity forms in the one or more parts (24). The heat dissipation technique includes one or more of a height-dependent pause, a variable interlayer pause time, temperature-graded inert gas control, and guided pressurized cool inert gas.

Fig. 1

(52) Cooperative Patent Classification (CPC): (Cont.)

C-Sets
B22F 2999/00, B22F 10/28, B22F 12/20,
B22F 2203/11;
B22F 2999/00, B22F 12/20, B22F 12/70

**Description**

The present disclosure relates generally to additive manufacturing and, more particularly, to a thermal management method for additive manufacturing.

Various additive manufacturing (AM) techniques are widely used to build precision parts relatively quickly. Many AM techniques that use a layer-by-layer build approach, such as laser beam powder bed fusion (PBF-LB) and the related electron beam powder bed fusion (PBF-EB) techniques, can be challenged with temperature build-up from prior layers. Such a challenge is particularly evident when building relatively tall structures or when the build protocol includes relatively short interlayer dwell times. The temperature build-up can increase the risk of keyhole defect formation, which can lead to a failed build campaign.

SUMMARY

One aspect of this disclosure is directed to a method of making a part using an additive manufacturing (AM) process including making, with an AM process, one or more parts and applying a heat dissipation technique to the one or more parts during performance of the AM technique to mitigate temperature build-up in the one or more parts. The heat dissipation technique is applied to keep temperature at a top of a part build at or below a Threshold Temperature (Tth), which is a temperature above which keyhole porosity forms in the one or more parts. The heat dissipation technique includes one or more of a variable height-dependent interlayer pause time, temperature-graded inert gas control, and guided pressurized cool inert gas.

Another aspect of this disclosure is directed to a cool inert gas nozzle system for use in an AM process. The cool inert gas nozzle system includes a central channel configured to release a stream of cool inert gas and an outer channel configured to use a suction to capture build powder particles displaced by the stream of cool inert gas.

BRIEF DESCRIPTION OF THE DRAWINGS

Fig. 1 is a schematic of an additive manufacturing (AM) machine described in this disclosure.
Fig. 2 is a first top view of a powder bed of an AM machine described in this disclosure.
Fig. 3 is a second top view of a powder bed of an AM machine described in this disclosure.
Fig. 4 is a schematic of parts of various heights on a AM machine build plate.
Fig. 5A is graphical representation of temperature on a top layer of parts as a function of build height for three scenarios described in this disclosure.
Fig. 5B is a schematic representation of part described in this disclosure showing a first height and a second height.
Fig. 5C-1 is graphical representation of interlayer dwell time as a function of build height for two scenarios described in this disclosure.

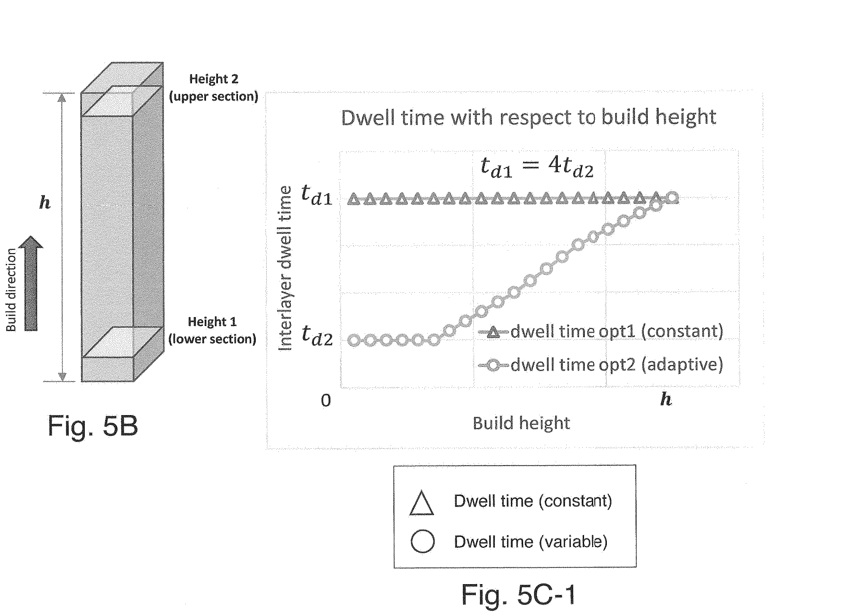

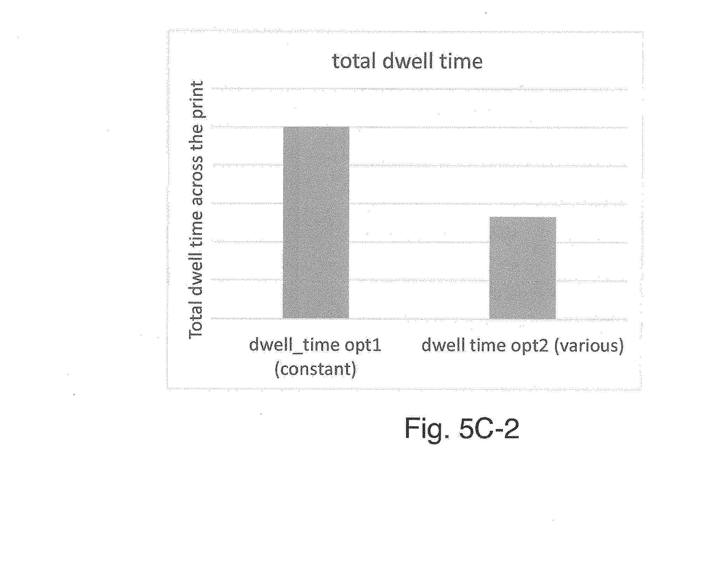

Fig. 5C-2 is graphical representation comparing interlayer dwell time for a first scenario to dwell time for a second scenario.

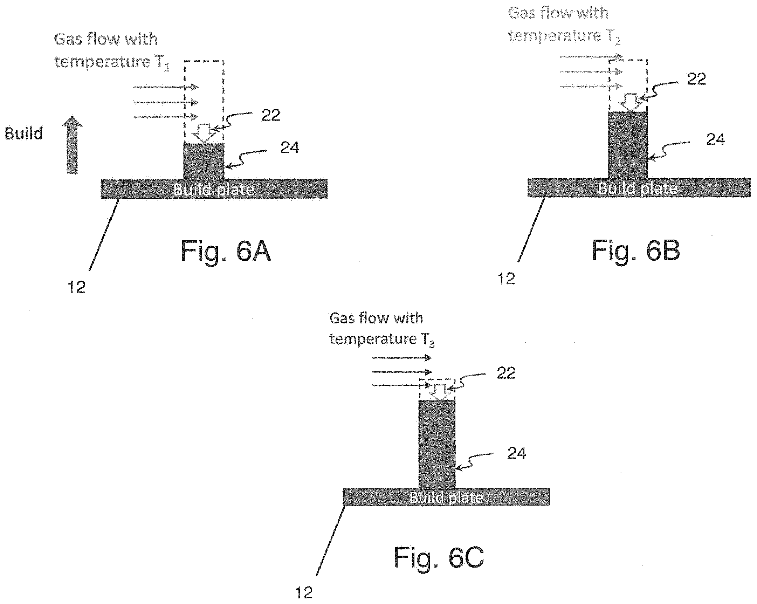

Figs. 6A-6C are schematic representations of part described in this disclosure depicting inert gas flow with temperatures varying by build height of a part.

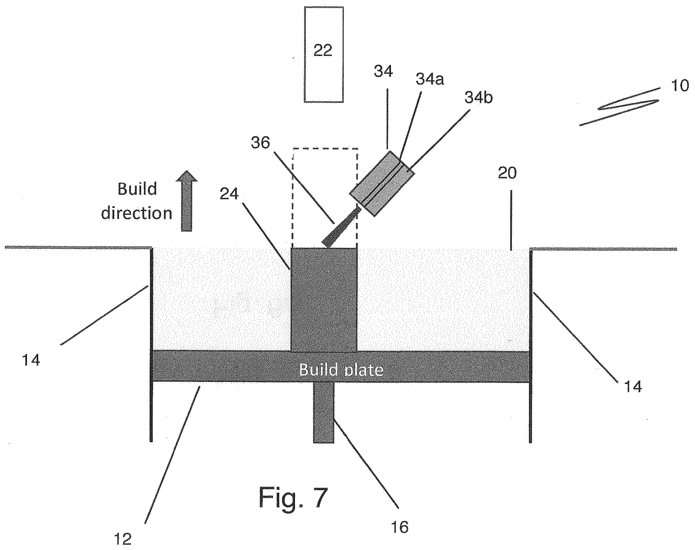

Fig. 7 is a schematic of an additive manufacturing (AM) machine showing a nozzle system for providing pressurized cool inert gas to the top of a part.

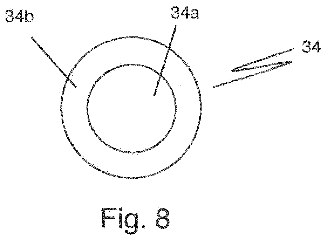

Fig. 8 is a schematic cross-section of a nozzle system for providing cool inert gas to the top of a part.

DETAILED DESCRIPTION

In additive manufacturing (AM), the challenge of temperature build-up from prior layers can pose a significant hurdle to building structures that conform to quality requirements. This can be particularly true for build campaigns that print tall structures or that include relatively short interlayer dwell times. Even with well-selected AM machine settings, the temperature build-up can elevate the risk of keyhole defect formation, especially toward the upper sections of the build. Applying mitigation techniques (e.g., using lower laser power, etc.) uniformly throughout the build may resolve the issue at the top layers of the build but could introduce lack of fusion defects toward the bottom layers of the build as a result of lower operating temperatures. This disclosure provides a nuanced and adaptive approach to temperature control to address these complexities and provide a uniformly high-quality build across all layers of the AM process.

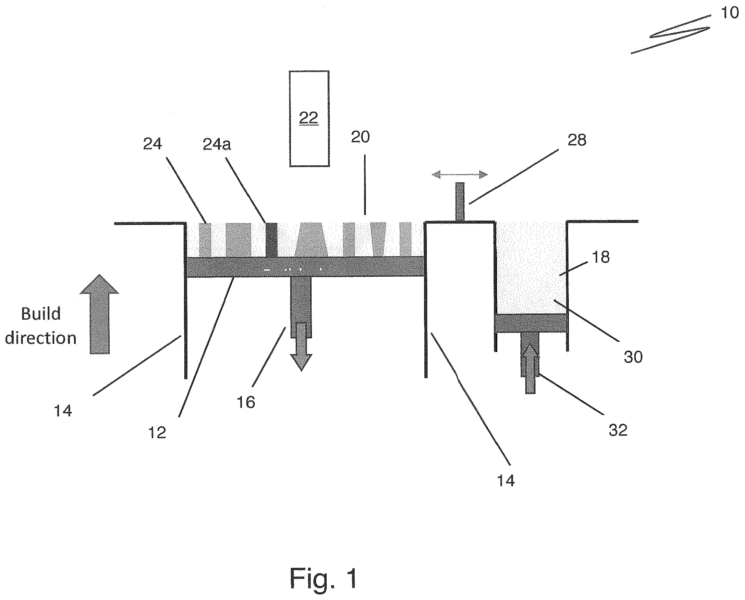

Fig. 1 shows an exemplary laser beam powder bed fusion (PBF-LB) machine **10** that includes a build plate **12** surrounded by walls **14** and positioned on a build piston **16**. In operation, the build plate **12** is covered with build powder **18,** which is contained within the walls **14** to form a build powder bed **20.** An energy source **22,** which may include a laser for a PBF-LB machine, an electron beam for a PBF-EB machine, or other suitable energy source, is configured to scan an exposed (i.e., top) surface of the build powder bed **20** to sinter selective portions of the build powder bed **20** to form one or more parts **24,** including a part of interest **24a** for this disclosure, on the build plate **12.** Such an operation can be referred to as a build powder scan cycle. After each pass of the energy source **22** over the build powder bed **20,** a build piston **16** lowers the build plate **12** a predetermined distance and a recoater **28** spreads a layer of fresh build powder **18** from a build powder reservoir **30** across the build powder bed. A build powder piston **32** in the build powder reservoir **30** is configured to deliver a predetermined amount of build powder to the recoater **28** for distribution across the build powder bed **20.**

The time required for (i) the energy source **22** to traverse the entire build powder bed **20,** (ii) the build piston **16** to lower the build plate **12,** and (iii) the recoater **28 to** spread fresh build powder **18** across the build powder bed **20** can be referred to as the interlayer dwell time. The interlayer dwell time for a particular part, such as the part of interest **24a,** can be expressed with the following equation:

$$t_{d,i}^{part} = t_i^{others} + t_e + t_r \qquad \text{(Equation 1)}$$

where:

$t_{d,i}^{part}$ : Interlayer dwell time for the part of interest **24a** at layer $i$

$t_i^{others}$ : Time to print the $i^{th}$ layer of all other parts **24** in the build

$t_e$: The duration the build piston **16** takes to move through one layer thickness

$t_r$: The duration required for the recoater **28** to spread the subsequent layer of fresh build powder **18**

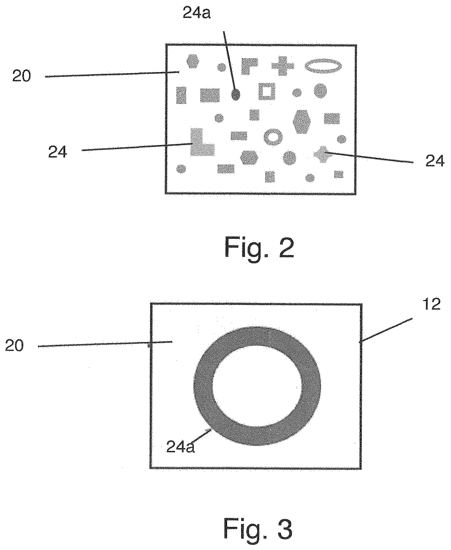

Figs. 2 and 3 are top views of the build powder bed **20** positioned on build plate **12** that includes the parts **24,** including the part of interest **24a,** to be built during a particular build campaign. The part **24a** of Fig. 3 is shown to be particularly large compared to the dimensions of the build plate **12** and build powder bed **20.**

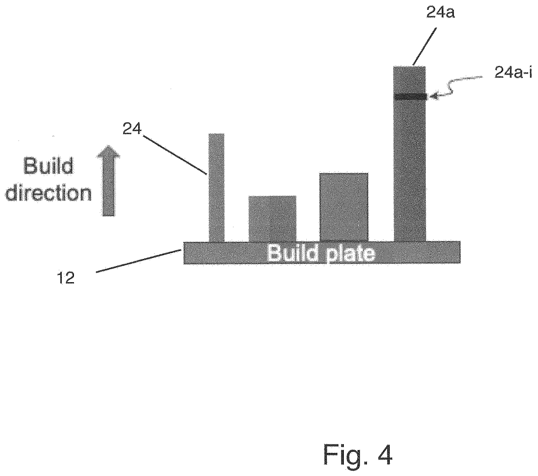

The interlayer dwell time as defined above is an important factor in understanding and defining AM build techniques, including PBF-LB and PBF-EB techniques. Short interlayer dwell times are prone to occur when the time to print a layer of the part of interest **24a,** $t_i^{part}$ , is significantly longer than the time to print the corresponding layers for all other parts **24,** $t_i^{others}$ . This situation may arise when the part of interest **24a** is large enough to occupy most of the build plate **12** (see Fig. 3) or when multiple parts **24** with varying heights are printed simultaneously, resulting in a shorter interlayer dwell times for the part of interest **24a** at the top of the build (see Fig. 4 in which part of interest 24a is the tallest part in the build). This occurs because $t_i^{others}$ (i.e., the build time other parts for the $i^{th}$ layer **24a-i**) becomes comparatively smaller (or even zero) than $t_i^{part}$ (i.e., the build time for the part of interest 24a for the $i^{th}$ layer **24a-i**), leading to a quicker transition between *successive* build powder layers.

The challenge of mitigating temperature build-up in such cases makes the use of heat dissipation techniques desirable. The required amount of heat dissipation varies from layer to layer of the build powder bed **20** due to the interplay of height and cross-section characteristics (e.g., for parts with variable cross-sections) of the parts **24,** including the part of interest **24a,** being built during a particular build campaign. This disclosure presents methods for layer-by-layer control of heat dissipation in AM techniques to reduce temperature accumulation from previous layers, thereby producing quality parts **24, 24a** with an acceptable level of defects. The heat dissipation techniques include:

- **Variable Height-Dependent Interlayer Pause:** Achieved through an engineered height-dependent pause between layers to allow dissipation of excess heat and reduce the risk of defects;
- **Temperature-Graded Inert Gas Control:** Engineered control of inert gas temperature as a function of layer height to provide more heat dissipation at upper build layers where elevated temperatures are typically encountered; and
- **Guided Pressurized Cool Inert Gas Control:** Introduction of guided pressurized cool inert gas over each build layer at the end of each scan cycle to improve heat dissipation and part quality.

These techniques can be applied with data-driven process control, by selecting an interlayer pause time or guided inert gas temperature based on modeling predictions and real-time sensor data to provide improved process control and adaptability.

The heat dissipation techniques can be applied on a layer-by-layer basis and can be applied individually or combined with any number of other heat dissipation techniques. The disclosed approaches are applicable to any part, build powder material, AM machine, and AM technique. For example, the part can be an aerospace part such as a gas turbine engine part (e.g., cases, combustors, fan section components, compressor section components, turbine section components, tubes, heat exchangers, etc.) or an airplane part (e.g., air cycle machine components, ram air turbine components, gear box components, generator and power distribution system components, flight control and actuation components, cabin components, propeller system components, landing gear components, air data system components, tubes, heat exchangers, etc.). A person of ordinary skill will recognize that the techniques of this disclosure can be used to make a wide variety of parts for other applications as well, including but not limited to various parts and systems for industrial, automotive, marine, and other applications. The build powder can be a metal, polymer, or any other material suitable for use for a selected part and AM technique. The AM technique and corresponding AM machine can be any such AM technique and AM machine that can benefit from use of the disclosed heat dissipation techniques.

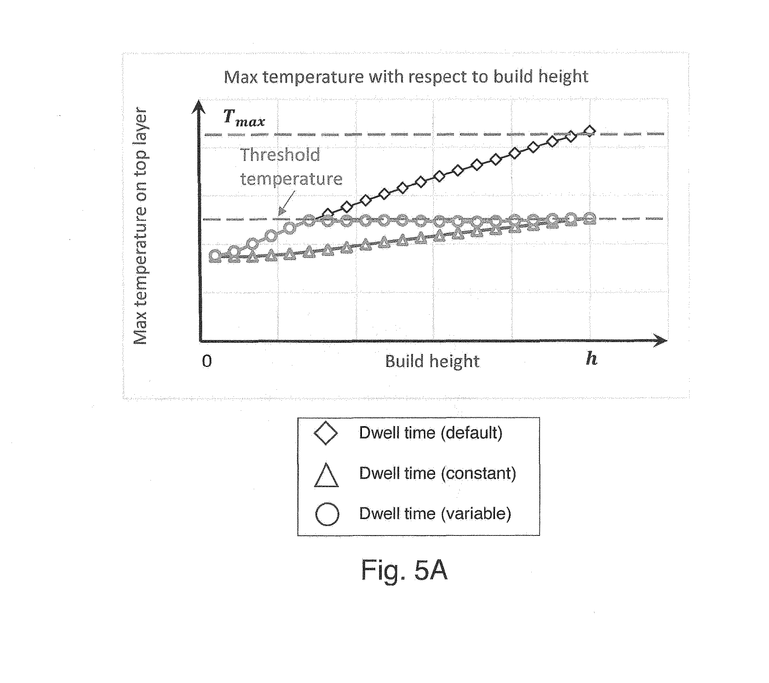

In one example, introduction of a height-dependent pause between layers allows for the dissipation of heat, mitigating the risk of thermal buildup and defects. Separately, or in combination with a height-dependent pause, a variable interlayer pause time provides a dynamic feature that can be selected to reduce print time while maintaining desired part quality. Figs. 5A to 5C provide an example to illustrate the impact of an interlayer pause for heat dissipation control. Fig. 5A depicts the result of using a constant interlayer dwell time without introducing any pause time (the diamonds in Fig. 5A). As the AM printing process advances upwards, temperature buildup becomes increasingly pronounced, leading to a heightened risk of keyhole defect formation toward the top of the build (see Fig. 5B) as the temperature on top of the build crosses a Threshold Temperature. The Threshold Temperature ($T_{th}$) is the temperature at which keyhole porosity will form deterministically based on considerations of material melting properties, vaporization properties, and other physical properties, as well as the depth and speed of a moving melt pool. The specific value of $T_{th}$ is determined through the use of a complete physics-based analytical model of the process.

Fig. 5A also shows the effectiveness of temperature control via introducing intentional interlayer pauses to keep the temperature buildup below a predefined limit, for example the $T_{th}$. Scenario 1 (the triangles in Fig. 5A) adopts a uniform pause time (i.e., a constant dwell time) for all layers, while scenario 2 (the circles in Fig. 5A) represents a more nuanced approach with a pause scheme that gradually increases from the bottom to the top of the build (see Fig. 5C-1) to reflect the increasing temperature build-up with height. The result in both cases is a controlled thermal environment throughout the AM printing process, reducing the risk of keyhole defect formation by keeping the temperature on top of the build at or below the $T_{th}$. Fig. 5C-2 shows that a gradual increase in interlayer pause time (i.e., interlayer pause time increases with increasing build height) can noticeably reduce total AM print time compared to the constant interlayer pause time, while preserving the same quality in terms of risk of defect formation. In the example of Fig 5C-2, the total AM print time with a gradual increase in interlayer pause time ("dwell time opt2") is about 47% shorter than the AM print time for a constant interlayer pause time ("dwell time opt1").

It should be noted that the introduced pause describe above can take various forms, ranging from one substantial pause at a specific layer to allow desired cooling, to a gradual increase in interlayer pause time. The determination of the desired strategy can be guided by modeling predictions to reduce the overall AM print time while providing sufficient heat dissipation at every layer.

Figs. 6A to 6C show an approach to temperature-graded control of inert gas flowing into the AM machine **10** that includes adjusting the inert gas temperature as a function of layer height to provide a greater amount of heat dissipation at elevated layers. The inert gas can be any gas that does not react with the part **24** or build power bed **20** during the AM process. For example, the inert gas can be nitrogen or another suitable gas. The inert gas can be at any temperature and pressure suitable to provide cooling to the part **24** and build power bed **20** during the AM process.

Fig. 7 shows a different approach that uses guided pressurized cool inert gas flowing over each layer after AM printing to provide controlled cooling by enhancing heat dissipation, contributing to the overall improvement of part quality. Fig. 7 shows a nozzle system **34** that is configured to deliver a controlled and targeted stream **36** of cool inert gas to the top layer of part **24.** The nozzle system **34** is positioned adjacent to the top layer of a part **24** in build powder bed **20** and has a dual functionality: first, it emits a precisely directed stream **36** of cool inert gas, and second, it incorporates a gentle suction mechanism (not expressly shown) to avoid disturbing un-sintered build powder particles on the surface of the build powder bed **20.** The nozzle system **34** is configured to interface with an AM machine (e.g., a PBF-LB or PBF-EB machine or other AM machine) to apply a heat dissipation technique as discussed above to the one or more parts during performance of an AM technique to mitigate temperature build-up in the one or more parts. Fig. 8 shows that the nozzle system **34** can feature a concentric structure with a central channel **34a** that releases the cool inert gas in a focused stream with a surrounding outer channel **34b** that employs a gentle suction to capture any build powder particles displaced from the build powder bed **20.** This allows the cool inert gas to be delivered without disturbing the build powder bed **20.**

The temperature of the cool inert gas can be selected to provide a desired rate and amount of cooling appropriate for a particular build campaign. The cool inert gas temperature can be altered for different portions of each layer and/or on a layer-by-layer basis as deemed appropriate for a particular build campaign. For example, the selection of interlayer dwell time or inert gas temperature and pressure can be guided by a combination of modeling predictions and real-time sensor data to provide an adaptable, data-driven approach to addressing interlayer temperature build up. The disclosed approaches are applicable any suitable AM technique and to be integrated into any suitable AM system to accommodate diverse build powder compositions, part designs, and AM printing methods.

The method for heat dissipation control that is the subject of this disclosure represents a new approach to addressing the challenge of temperature buildup during AM processes. One focus of the method is to manage heat dissipation layer by layer to allow for production of parts that achieve predetermined quality metrics. The disclosed method can be particularly effective for AM build campaigns directed to tall parts or when interlayer dwell times are relatively short, such as often encountered toward the top of a build. The disclosed method includes various engineered controls, each contributing to the overall improved results from the AM process. As a result, the disclosed method:

- Provides an approach to designing and manufacturing AM parts with an acceptable quality to reduce post-build operations in a production process chain;
- Mitigates the risk of thermal build-up from prior layers that can compromise the structural integrity of the final product;
- Provides a variable interlayer pause time to reduce AM print time without sacrificing quality;
- Provides temperature control of the inert gas to facilitate greater heat dissipation at upper levels of a build where thermal challenges are more pronounced;
- Integrates seamlessly into any AM system or processing method, offering a widely applicable solution applicable across a spectrum of components and materials;
- Reduces thermal stresses in parts build with the disclosed method, reducing the likelihood of warping or distortion in the AM printed parts; and
- Provides consistent and reproducible print quality across variable layers and components in an AM build process.

Discussion of Possible Embodiments

The following are non-exclusive descriptions of possible embodiments of the present invention.

A method of making a part using an additive manufacturing (AM) process including making, with an AM process, one or more parts and applying a heat dissipation technique to the one or more parts during performance of the AM technique to mitigate temperature build-up in the one or more parts. The heat dissipation technique is applied to keep temperature at a top of a part build at or below a Threshold Temperature (Tth), which is a temperature above which keyhole porosity forms in the one or more parts. The heat dissipation technique includes one or more of a variable height-dependent interlayer pause, temperature-graded inert gas control, and guided pressurized cool inert gas.

The method of the preceding paragraph can optionally include any one or more of the following features, configurations and/or additional elements:

The preceding method, wherein the one or more parts are aerospace parts.

The preceding method, wherein the aerospace parts are gas turbine parts

The preceding method, wherein the aerospace parts are airplane parts.

The preceding method, wherein selection of the heat dissipation technique is selected based on modeling predictions and/or real-time sensor data collected during the AM process.

The preceding method, wherein the variable height-dependent interlayer pause includes increasing an interlayer pause time in variable increments for each successive layer from a bottom to a top of a part build, wherein the variable increments are determined based on modeling of the AM process.

The preceding method, wherein the temperature-graded inert gas control includes flowing inert cooling gas over the part and adjusting an inert cooling gas temperature as a function of successive layer height to provide a greater amount of heat dissipation with increasing part height.

The preceding method, wherein the guided pressurized cool inert gas control includes directing cool inert gas toward the part using a cool inert gas nozzle system, wherein the cool inert gas nozzle system comprises a central channel configured to release a stream of cool inert gas and an outer channel configured to use a suction to capture build powder particles displaced by the stream of cool inert gas.

The preceding method, wherein the AM process is laser powder bed fusion (PBF-LB) or electron beam powder bed fusion (PBF-EB).

A cool inert gas nozzle system for use in an AM process. The cool inert gas nozzle system includes a central channel configured to release a stream of cool inert gas and an outer channel configured to use a suction to capture build powder particles displaced by the stream of cool inert gas.

The cool inert gas nozzle system of the preceding paragraph can optionally include any one or more of the following features, configurations and/or additional elements:

The preceding cool inert gas nozzle system, wherein the AM process is laser powder bed fusion (PBF-LB) or electron beam powder bed fusion (PBF-EB).

The preceding cool inert gas nozzle system, wherein the cool inert gas nozzle system is configured to interface with an AM machine to apply a heat dissipation technique to the one or more parts during performance of an AM technique to mitigate temperature build-up in the one or more parts, wherein the heat dissipation technique is applied to keep temperature at a top of a part build at or below a Threshold Temperature ($T_{th}$).

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

**Claims**

1.   A method of making a part using an additive manufacturing (AM) process, comprising:

   making, with an AM process, one or more parts (24); and
   applying a heat dissipation technique to the one or more parts (24) during performance of the AM technique to mitigate temperature build-up in the one or more parts (24), wherein the heat dissipation technique is applied to keep temperature at a top of a part build at or below a Threshold Temperature ($T_{th}$);
   wherein the Threshold Temperature ($T_{th}$) is a temperature above which keyhole porosity forms in the one or more parts (24);
   wherein the heat dissipation technique includes one or more of a variable height-dependent interlayer pause, temperature-graded inert gas control, and guided pressurized cool inert gas.

2.   The method of claim 1, wherein the one or more parts (24) are aerospace parts.

3.   The method of claim 2, wherein the aerospace parts are gas turbine parts.

4.   The method of claim 2, wherein the aerospace parts are airplane parts.

5.   The method of claim 1, 2 or 3, wherein selection of the heat dissipation technique is selected based on modeling predictions and/or real-time sensor data collected during the AM process.

6.   The method of any preceding claim, wherein the variable height-dependent interlayer pause includes increasing an interlayer pause time in variable increments for each successive layer from a bottom to a top of a part build, wherein the variable increments are determined based on modeling of the AM process.

7.   The method of any preceding claim, wherein the temperature-graded inert gas control includes flowing inert cooling gas over the part (24) and adjusting an inert cooling gas temperature as a function of successive layer height to provide a greater amount of heat dissipation with increasing part height.

8.   The method of any preceding claim, wherein the guided pressurized cool inert gas control includes directing cool inert gas toward the part (24) using a cool inert gas nozzle system (34), wherein the cool inert gas nozzle system (34) comprises a central channel (34a) configured to release a stream of cool inert gas and an outer channel (34b) configured to use a suction to capture build powder particles displaced by the stream of cool inert gas.

9.   The method of any preceding claim, wherein the AM process is laser powder bed fusion (PBF-LB) or electron beam powder bed fusion (PBF-EB).

10.   The method of any preceding claim, wherein:

   the one or more parts (24) comprise at least a first part having a first height and a second part having a second height and the second height is less than the first height;
   the heat dissipation technique includes at least a variable height-dependent interlayer pause and the height-dependent interlayer pause for a layer including both the first part and the second part is longer than the height-dependent pause for a layer including only the first part.

11.   A cool inert gas nozzle system (34) for use in an AM process, wherein the cool inert gas nozzle system (34) comprises:

a central channel (34a) configured to release a stream of cool inert gas; and
an outer channel (34b) configured to use a suction to capture build powder particles displaced by the stream of cool inert gas.

12. The cool inert gas nozzle system (34) of claim 11, wherein the AM process is laser powder bed fusion (PBF-LB) or electron beam powder bed fusion (PBF-EB).

13. The cool inert gas nozzle system (34) of claim 11 or 12, wherein the cool inert gas nozzle system (34) is configured to interface with an AM machine (10) to apply a heat dissipation technique to the one or more parts (24) during performance of an AM technique to mitigate temperature build-up in the one or more parts (24), wherein the heat dissipation technique is applied to keep temperature at a top of a part build at or below a Threshold Temperature ($T_{th}$).

Fig. 1

Fig. 2

Fig. 3

Fig. 4

## Max temperature with respect to build height

Fig. 5A

Height 2
(upper section)

$h$

Build direction

Height 1
(lower section)

Fig. 5B

## Dwell time with respect to build height

$$t_{d1} = 4t_{d2}$$

$t_{d1}$

$t_{d2}$

Interlayer dwell time

—△—dwell time opt1 (constant)

—○—dwell time opt2 (adaptive)

0

$h$

Build height

△ Dwell time (constant)

○ Dwell time (variable)

Fig. 5C-1

total dwell time

Total dwell time across the print

dwell_time opt1
(constant)

dwell time opt2 (various)

Fig. 5C-2

Gas flow with temperature $T_2$

22

24

Build plate

Fig. 6B

12

Gas flow with temperature $T_3$

22

24

Build plate

Fig. 6C

12

Gas flow with temperature $T_1$

22

24

Build plate

Fig. 6A

Build

12

Fig. 7

34

34a

34b

Fig. 8

## EUROPEAN SEARCH REPORT

**Application Number**

EP 25 19 2273

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RIENSCHE ALEX ET AL: "Feedforward control of thermal history in laser powder bed fusion: Toward physics-based optimization of processing parameters", MATERIALS & DESIGN, ELSEVIER, AMSTERDAM, NL, vol. 224, 15 November 2022 (2022-11-15), XP087232158, ISSN: 0264-1275, DOI: 10.1016/J.MATDES.2022.111351 [retrieved on 2022-11-15] * the whole document * | 1-6,9,10 | INV. B22F10/28 B22F10/322 B22F10/368 B22F10/38 B22F12/20 B33Y10/00 B33Y30/00 B33Y50/02 B22F10/85 |
| X | CN 116 511 526 A (UNIV SOUTHEAST) 1 August 2023 (2023-08-01) * paragraph [0020] * * claims 1,2 * | 1,2,5,9 | |
| X | US 2022/371097 A1 (GREENFIELD JACOB [US] ET AL) 24 November 2022 (2022-11-24) * paragraph [0002] * * paragraph [0014] * * claims 1,7,12 * * figure 1 * | 1,2,4,5,7,9 | |
| | | | **TECHNICAL FIELDS SEARCHED (IPC)** |
| X | US 2024/227014 A1 (CALEFATI SANTE [IT] ET AL) 11 July 2024 (2024-07-11) * paragraph [0004] * * paragraph [0020] * * paragraph [0022] - paragraph [0028] * * figures 1-3, 5 * | 1,8,11-13 | B22F B33Y |

The present search report has been drawn up for all claims

| Place of search | Date of completion of the search | Examiner |
|---|---|---|
| The Hague | 4 December 2025 | Järvi, Tommi |

EPO FORM 1503 03.82 (P04C01)

## ANNEX TO THE EUROPEAN SEARCH REPORT
## ON EUROPEAN PATENT APPLICATION NO.

EP 25 19 2273

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2025

| Patent document cited in search report | | Publication date | Patent family member(s) | | Publication date |
|---|---|---|---|---|---|
| CN 116511526 | A | 01-08-2023 | NONE | | |
| US 2022371097 | A1 | 24-11-2022 | EP | 4091743 A1 | 23-11-2022 |
| | | | US | 2022371097 A1 | 24-11-2022 |
| US 2024227014 | A1 | 11-07-2024 | EP | 4337406 A1 | 20-03-2024 |
| | | | JP | 2024519779 A | 21-05-2024 |
| | | | US | 2024227014 A1 | 11-07-2024 |
| | | | WO | 2022239039 A1 | 17-11-2022 |

EPO FORM P0459

For more details about this annex : see Official Journal of the European Patent Office, No. 12/82